# EUROPEAN PATENT APPLICATION

(11) **EP 4 736 682 A1**
(43) Date of publication of application: **06.05.2026**
(21) Application number: 25212562.0
(22) Date of filing: 31.10.2025
(51) Int. Cl.: A24F 40/48, A24F 40/10

(54) **ELECTRONIC ATOMIZATION DEVICE**

(30) Priority: 31.10.2024 CN 202422660857 U
(71) Applicant: Shenzhen Smoore Technology Limited, Shenzhen, Guangdong 518102 (CN)
(72) Inventor: HUANG, Hui, Shenzhen, 518102 (CN); XIA, Chang, Shenzhen, 518102 (CN); WU, Jianqing, Shenzhen, 518102 (CN); ZHOU, Yu, Shenzhen, 518102 (CN)
(74) Representative: Winter, Brandl - Partnerschaft mbB

(57) **Abstract**

The present application relates to an electronic atomization device, including: a first liquid storage chamber provided with a liquid storage member therein; an atomizing core in fluid communication with the liquid storage member; a second liquid storage chamber; a replenishment channel in communication with the first liquid storage chamber and the second liquid storage chamber; and an electronic control switch assembly configured to open the replenishment channel when powered on and close the replenishment channel when powered off. In the present application, by additionally providing a second liquid storage chamber to replenish the first liquid storage chamber, the volume of the liquid storage member in the first liquid storage chamber can be reduced, thereby enhancing the actual utilization efficiency of the aerosol generating substrate and reducing liquid leakage. In addition, the atomizing core is kept at a distance from the second liquid storage chamber without being directly in fluid communication therewith, which helps reduce the likelihood of the aerosol generating substrate in the second liquid storage chamber being affected by heat and prevents contamination of the aerosol generating substrate in the second liquid storage chamber.

## Description

### TECHNICAL FIELD

The present application relates to the field of atomization technology, and more particularly, to an electronic atomization device.

### BACKGROUND

Currently, mainstream electronic atomization devices on the market have a relatively small liquid storage capacity, typically around 2 mL. However, during use, users often overlook the remaining amount of the aerosol generating substrate, which may result in overheating and damage to an atomizing core. To address the above problem, large-capacity electronic atomization devices have been introduced to the market, increasing the storage capacity of the aerosol generating substrate to reduce or eliminate the need for frequent replenishment of the aerosol generating substrate. However, as the capacity of the aerosol generating substrate increases, the risk of liquid leakage correspondingly increases significantly.

In addition, since the atomizing core is directly connected to a liquid storage chamber, heat generated during inhalation is transferred to the aerosol generating substrate in the liquid storage chamber, thereby increasing the temperature of the aerosol generating substrate. The temperature rise may accelerate the volatilization of certain components in the aerosol generating substrate, affecting the final taste experience and causing the flavor to weaken or change.

Moreover, large-capacity (e.g., > 10 mL) electronic atomization devices on the market generally use liquid storage cotton. Due to the storage function of the liquid storage cotton for the aerosol generating substrate, only about 75% of the aerosol generating substrate is used in devices using liquid storage cotton, with the remaining 25% wasted, resulting in a relatively low utilization rate of the aerosol generating substrate.

### SUMMARY

The technical problem to be solved by the present application is to provide an improved electronic atomization device in view of the above shortcomings of the prior art.

The technical solution adopted by the present application to solve the technical problem is as follows: An electronic atomization device is provided, including: a first liquid storage chamber provided with a liquid storage member therein; an atomizing core in fluid communication with the liquid storage member; a second liquid storage chamber; a replenishment channel in communication with the first liquid storage chamber and the second liquid storage chamber; and an electronic control switch assembly configured to open the replenishment channel when powered on and close the replenishment channel when powered off.

In some embodiments, the liquid storage space of the first liquid storage chamber is smaller than the liquid storage space of the second liquid storage chamber.

In some embodiments, the electronic atomization device includes a control module, where the electronic control switch assembly includes a drive assembly connected to the control module and a valve assembly connected to the drive assembly, the drive assembly including an actuating member made of shape memory material.

In some embodiments, the actuating member is a spring made of a shape memory alloy (SMA), and the actuating member elongates when electrically heated to drive the valve assembly to move and open the replenishment channel.

In some embodiments, the drive assembly further includes a first connecting member and a second connecting member,
the first connecting member being disposed through the second connecting member in an insulated manner and movable back and forth relative to the second connecting member, and
the actuating member being sleeved over the first connecting member, and two ends of the actuating member being connected to the first connecting member and the second connecting member, respectively.

In some embodiments, the valve assembly includes a valve connected to the drive assembly and an elastic element connected to the valve,
the elastic element being configured to provide an elastic restoring force to reset the valve from a state in which the replenishment channel is opened to a state in which the replenishment channel is closed.

In some embodiments, the control module is configured to supply power to the electronic control switch assembly when the accumulated atomization time reaches a preset threshold.

In some embodiments, the electronic atomization device includes a housing, the housing being partitioned to form a first space located at the lower portion and a second space located at the upper portion,
the first liquid storage chamber, the atomizing core, and the control module being located in the first space, and the second liquid storage chamber being located in the second space.

In some embodiments, the electronic atomization device further includes a battery arranged in the first space.

In some embodiments, after the replenishment channel is opened, aerosol generating substrate in the second liquid storage chamber flows to the first liquid storage chamber under the action of gravity.

The present application has at least the following advantageous effects: In the present application, by additionally providing a second liquid storage chamber to replenish the first liquid storage chamber, the volume of the liquid storage member in the first liquid storage chamber can be reduced, thereby enhancing the actual utilization efficiency of the aerosol generating substrate and reducing liquid leakage. The atomizing core is kept at a distance from the second liquid storage chamber without being directly in fluid communication therewith, which helps reduce the likelihood of the aerosol generating substrate in the second liquid storage chamber being affected by heat and prevents contamination of the aerosol generating substrate in the second liquid storage chamber. In addition, the first liquid storage chamber and the second liquid storage chamber are connected via the electronic control switch assembly, thereby facilitating liquid replenishment.

### BRIEF DESCRIPTION OF THE DRAWINGS

The present application is further described below with reference to the drawings and embodiments. In the drawings:
FIG. 1 is a schematic perspective view of an electronic atomization device according to some embodiments of the present application.
FIG. 2 is a schematic longitudinal sectional view of an electronic atomization device shown in FIG. 1.
FIG. 3 is a schematic longitudinal sectional view of a portion of an internal structure of an electronic atomization device shown in FIG. 2.
FIG. 4 is a schematic exploded view of the portion of the structure shown in FIG. 3.

### DETAILED DESCRIPTION

In order to have a clearer understanding of the technical features, objectives, and effects of the present application, specific implementations of the present application are now illustrated in detail with reference to the drawings. Many specific details are described below to facilitate a thorough understanding of the present application. However, the present application may be embodied in many other ways different from those described herein, and a person skilled in the art can make similar modifications without departing from the scope of the present application. Therefore, the present application is not limited to the specific embodiments disclosed below.

It is to be understood in the description of the present application that orientations or positional relationships indicated by the terms such as "longitudinal", "transverse", "upper", "lower", "top", "bottom", "inner", and "outer" are based on the orientations or positional relationships shown in the drawings or on the orientations or positional relationships when the product of the present application is placed during normal use. These terms are merely used for the convenience of describing the present application and simplifying the description, rather than indicating or implying that the mentioned device or element is to have a specific orientation or be constructed and operated in a specific orientation. Therefore, the terms are not to be construed as limiting the present application.

In addition, the terms "first" and "second" are used merely for descriptive purposes and cannot be construed as indicating or implying relative importance, nor as implicitly specifying the number of the referenced technical features. Therefore, a feature designated as "first" or "second" may explicitly or implicitly include at least one of such features. In the description of the present application, unless otherwise explicitly and specifically limited, "a plurality of" means at least two, such as two or three.

In the present application, unless otherwise explicitly specified or limited, the terms "mount", "be connected to", "connect", "fix", and the like are to be understood in a broad sense. For example, they may refer to a fixed connection, a detachable connection, or an integral structure; a mechanical connection or an electrical connection; a direct connection or an indirect connection via an intermediate medium; or internal communication between two elements or an interaction relationship between the two elements, unless otherwise explicitly limited. A person of ordinary skill in the art can understand the specific meanings of the above terms in the present application according to specific circumstances.

In the present application, unless otherwise explicitly specified or limited, a first feature being "above" or "below" a second feature may mean that the first feature and the second feature are in direct contact, or the first feature and the second feature are in indirect contact via an intermediate medium. In addition, the first feature being "above" the second feature may mean that the first feature is directly above or obliquely above the second feature, or may merely indicate that the first feature is at a higher horizontal level than the second feature. The first feature being "below" the second feature may mean that the first feature is directly below or obliquely below the second feature, or may merely indicate that the first feature is at a lower horizontal level than the second feature.

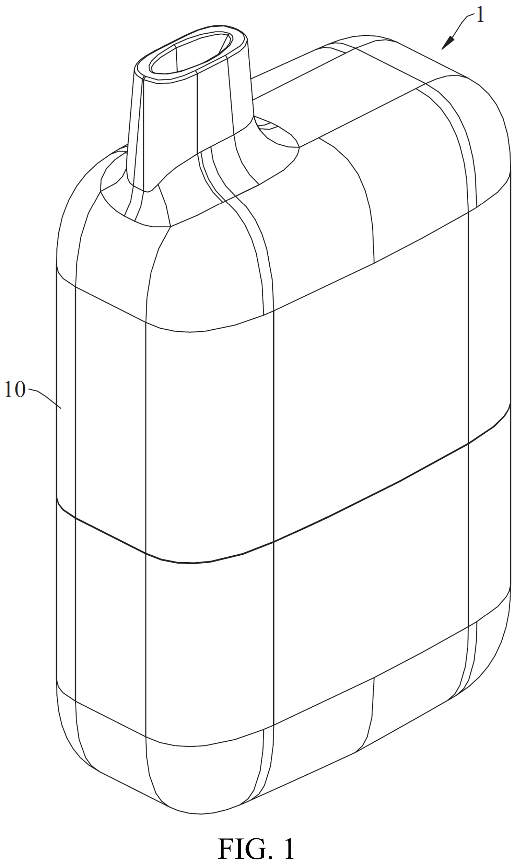

FIG. 1 shows an electronic atomization device 1 according to some embodiments of the present application. The electronic atomization device 1 is configured to accommodate aerosol generating substrate and to heat and atomize the aerosol generating substrate when powered on. The aerosol generating substrate includes, but is not limited to, materials for medical, wellness, health, cosmetic, or similar purposes.

The shape of the electronic atomization device 1 is not limited. For example, it may have various shapes, such as a rectangular column, an elliptical column, a racetrack-shaped column, or a cylindrical column. In addition, the heating method of the electronic atomization device 1 is not limited. For example, it may employ one or more heating methods, such as resistive heating, electromagnetic heating, infrared heating, or chemical heating.

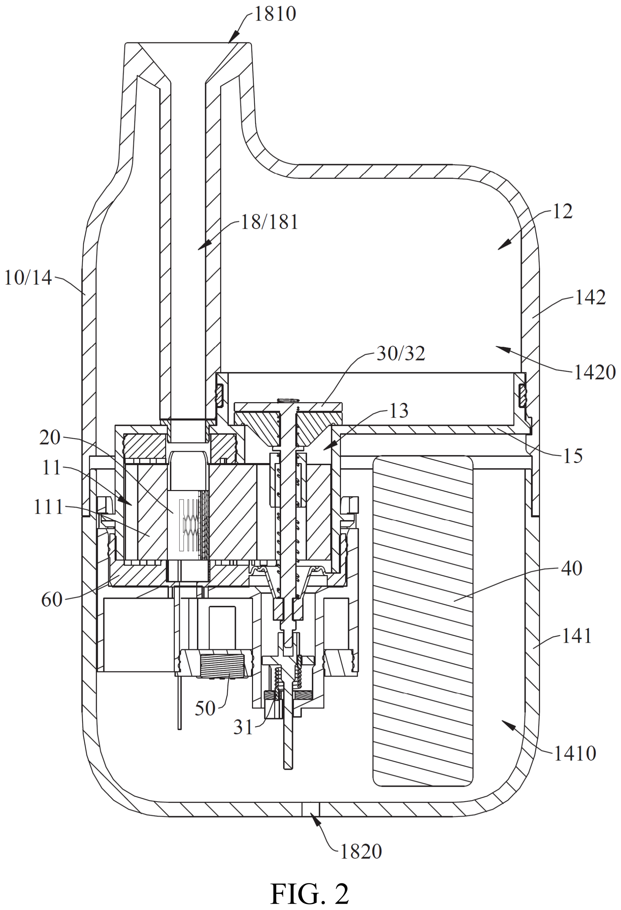

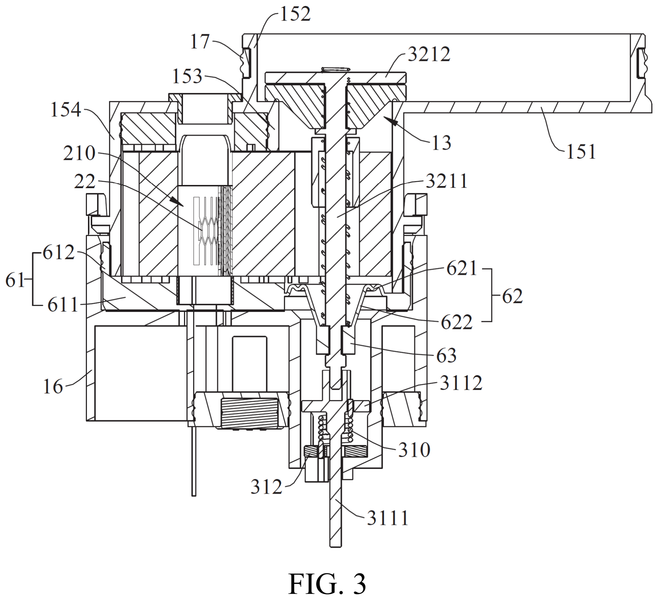

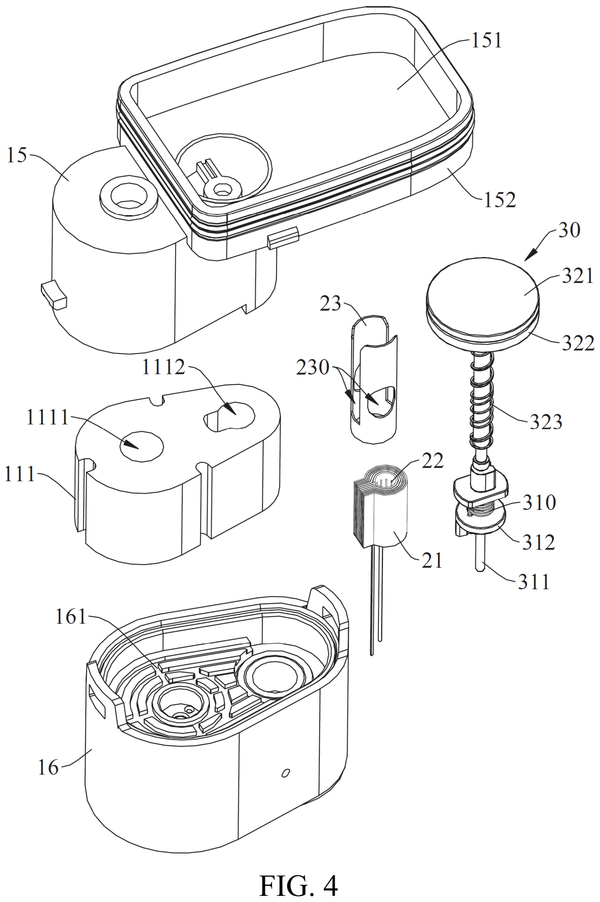

As shown in FIG. 2 to FIG. 4, the electronic atomization device 1 includes a housing 10, and an atomizing core 20 and an electronic control switch assembly 30 disposed within the housing 10. Within the housing 10 are formed a first liquid storage chamber 11, a second liquid storage chamber 12, and a replenishment channel 13 in communication with the first liquid storage chamber 11 and the second liquid storage chamber 12. The atomizing core 20 is in fluid communication with the first liquid storage chamber 11 and is configured to heat and atomize the aerosol generating substrate stored in the first liquid storage chamber 11 when powered on. The electronic control switch assembly 30 is at least partially disposed in the replenishment channel 13 and is configured to open the replenishment channel 13 when powered on and to close the replenishment channel 13 when powered off.

In addition, an airflow channel 18 is also formed in the housing 10, the airflow channel 18 including an air inlet 1820 and an air intake 1810. The air intake 1810 is typically located at one end of the housing 10 (illustrated as the upper end). The air inlet 1820 may be disposed at any position on the housing 10, for example, on the bottom wall or the side wall of the housing 10. The atomizing core 20 is in airflow communication with the airflow channel 18. When a user inhales through the air intake 1810, external air enters through the air inlet 1820, flows through the atomizing core 20, and carries the aerosol generated by atomization of the atomizing core 20 through the airflow channel 18 to the air intake 1810 for the user to inhale.

Further, the electronic atomization device 1 may further include a battery 40 and a control module disposed within the housing 10. The atomizing core 20 and the battery 40 are electrically connected to the control module. The control module can control the battery 40 to supply or cut off power to the atomizing core 20, and can also control the power level of the electricity supplied by the battery 40 to the atomizing core 20. In addition, the control module is electrically connected to the electronic control switch assembly 30, and can control the battery 40 to supply or cut off power to the electronic control switch assembly 30.

In some embodiments, the electronic atomization device 1 may further include an airflow sensing member 50 disposed in the housing 10, the airflow sensing member 50 being electrically connected to the control module and in airflow communication with the airflow channel 18. When the user begins to inhale, the airflow sensing member 50 detects the change in air pressure and, via the control module, activates the battery 40 to supply power to the atomizing core 20, thereby atomizing the aerosol generating substrate in the first liquid storage chamber 11.

The liquid storage space of the second liquid storage chamber 12 is greater than the liquid storage space of the first liquid storage chamber 11, or the liquid storage capacity of the second liquid storage chamber 12 is greater than the liquid storage capacity of the first liquid storage chamber 11. For example, the liquid storage capacity of the first liquid storage chamber 11 is about 2 mL, and the liquid storage capacity of the second liquid storage chamber 12 is about 10 mL. Certainly, in other embodiments, the liquid storage space (liquid storage capacity) of the second liquid storage chamber 12 may be less than or equal to the liquid storage space (liquid storage capacity) of the first liquid storage chamber 11.

In some embodiments, the second liquid storage chamber 12 may be a liquid storage cavity, into which the aerosol generating substrate is injected for storage. This structure is advantageous for storing a larger amount of aerosol generating substrate. Certainly, in other embodiments, a liquid storage member may be disposed in the second liquid storage chamber 12, and the liquid storage member can store liquid through capillary force or other forces.

In some embodiments, at least part of the walls of the second liquid storage chamber 12 is transparent, thereby facilitating the user's observation of the liquid level in the second liquid storage chamber 12. Certainly, in other embodiments, the walls of the second liquid storage chamber 12 may be non-transparent.

In some embodiments, the second liquid storage chamber 12 is a refillable structure. For example, a liquid injection hole may be provided in the walls of the second liquid storage chamber 12, allowing the aerosol generating substrate in the second liquid storage chamber 12 to be replenished for continued use after depletion; alternatively, the second liquid storage chamber 12 may adopt a detachable and replaceable modular structure, enabling continued use by replacing it with a new second liquid storage chamber 12. Certainly, the second liquid storage chamber 12 may adopt a non-refillable and non-detachable structure, in which case the entire electronic atomization device 1 needs to be replaced after the aerosol generating substrate is depleted. In some embodiments, a liquid storage member 111 may be disposed in the first liquid storage chamber 11, and the liquid storage member 111 can store liquid through capillary force or other forces. Certainly, in other embodiments, the first liquid storage chamber 11 may be a liquid storage cavity, into which the aerosol generating substrate is injected for storage.

In some embodiments, the liquid storage member 111 is made of a porous material exhibiting capillary force. For example, the liquid storage member 111 may be liquid storage cotton (including cotton materials such as natural cotton and/or artificial cotton), which can effectively prevent liquid leakage from the first liquid storage chamber 11 even under changes in temperature and pressure. Certainly, in other embodiments, the liquid storage member 111 may include an inorganic porous material, such as ceramic or glass fiber.

In some embodiments, during the manufacturing stage, the liquid storage member 111 in the first liquid storage chamber 11 may be pre-filled with the aerosol generating substrate, ensuring that the user can use it immediately after purchase. Certainly, in other embodiments, during the manufacturing stage, the liquid storage member 111 in the first liquid storage chamber 11 may not be pre-filled with the aerosol generating substrate, which can prevent liquid leakage during packaging, transportation, and the like.

Since the liquid storage space of the first liquid storage chamber 11 is relatively small, the volume of the liquid storage member 111 is also small. Compared with the conventional full-liquid-storage-cotton design, the actual utilization efficiency of the aerosol generating substrate can be significantly enhanced, with a utilization rate up to 95% for the aerosol generating substrate. Moreover, due to the storage function of the liquid storage member 111, liquid leakage during packaging, transportation, and the like can also be reduced.

In addition, the atomizing core 20 is not directly in fluid communication with the second liquid storage chamber 12 and is kept at a distance from it. This helps reduce the likelihood that the aerosol generating substrate in the second liquid storage chamber 12 is affected by heat and prevents contamination of the aerosol generating substrate in the second liquid storage chamber 12, thereby enhancing the freshness of the aerosol generating substrate and mitigating taste degradation.

The atomizing core 20 is disposed in the first liquid storage chamber 11 and may include a liquid-absorbing element 21 in fluid communication with the first liquid storage chamber 11, and a heating element 22 in contact with the liquid-absorbing element 21. The liquid-absorbing element 21 can draw the aerosol generating substrate from the first liquid storage chamber 11 and deliver it to the heating element 22.

The liquid-absorbing element 21 may have any structure capable of transporting or conveying the aerosol generating substrate to the heating element 22. Typically, the liquid-absorbing element 21 can guide the liquid through capillary force. In some embodiments, the liquid-absorbing element 21 may be formed of a porous material exhibiting capillary force, including but not limited to cotton materials (e.g., natural cotton and/or artificial cotton) or inorganic porous materials (e.g., ceramic or glass fiber).

When the first liquid storage chamber 11 includes a liquid storage member 111, the liquid storage member 111 may be disposed to surround the atomizing core 20. The liquid-absorbing capacity of the liquid-absorbing element 21 is greater than the liquid-absorbing capacity of the liquid storage member 111; that is, the capillary force of the liquid-absorbing element 21 is greater than the capillary force of the liquid storage member 111. This allows the aerosol generating substrate to be efficiently guided from the liquid storage member 111 with a lower liquid-absorbing capacity to the liquid-absorbing element 21 with a higher liquid-absorbing capacity, and then conveyed to the heating element 22.

The atomizing core 20 may have a generally tubular shape extending through two ends (e.g., cylindrical). The liquid-absorbing element 21 has a tubular shape, with an airflow through-hole 210 formed therethrough. The heating element 22 may be disposed on the inner wall of the liquid-absorbing element 21. The liquid storage member 111 surrounds the exterior of the liquid-absorbing element 21 and is in fluid communication with the liquid-absorbing element 21. The airflow channel 18 includes an air outlet channel 181, and the atomizing core 20 and the air outlet channel 181 may be disposed coaxially, such that the airflow through-hole 210 is in fluid communication with the lower end of the air outlet channel 181.

In some embodiments, the electronic atomization device 1 may further include a support tube 23 sleeved over the atomizing core 20 to support and secure the atomizing core 20. A mounting hole 1111 is formed through the liquid storage member 111, and the support tube 23 is disposed longitudinally in the mounting hole 1111. At least one liquid inlet 230 is disposed on the side wall of the support tube 23 to establish fluid communication between the liquid storage member 111 and the liquid-absorbing element 21.

Certainly, in other embodiments, the atomizing core 20 may adopt any known atomizing assembly structure. For example, the liquid-absorbing element 21 may be a bowl-shaped liquid-absorbing element, with the heating element 22 disposed on one side surface of the bowl-shaped liquid-absorbing element; alternatively, the liquid-absorbing element 21 may be a rod-shaped liquid-absorbing element disposed horizontally or vertically, with the heating element 22 disposed on the outer surface of the rod-shaped liquid-absorbing element 21 by winding, coating, or the like.

In some embodiments, the housing 10 may include a shell 14 and a bracket 15 disposed within the shell 14. The bracket 15 partitions the interior of the housing 14 into a first space 1410 located at the lower portion and a second space 1420 located at the upper portion. The second liquid storage chamber 12 is located in the second space 1420. The first liquid storage chamber 11, the atomizing core 20, the battery 40, the airflow sensing member 50, and at least part of the electronic control switch assembly 30 are all located in the first space 1410. The control module includes a circuit board, which may be accommodated in the first space 1410 to facilitate electrical connection to the atomizing core 20, the battery 40, the airflow sensing member 50, and the electronic control switch assembly 30.

In some embodiments, the atomizing core 20 and the second liquid storage chamber 12 are disposed non-coaxially. The electronic atomization device 1 has an opposite first side and second side in the lateral direction. The first liquid storage chamber 11 may be disposed in the first space 1410 and adjacent to the first side, and the second liquid storage chamber 12 may be disposed in the second space 1420 and adjacent to the second side. The atomizing core 20 is located in the first liquid storage chamber 11 and adjacent to the first side, thereby maintaining a sufficient distance between the atomizing core 20 and the second liquid storage chamber 12, and reducing the likelihood that the aerosol generating substrate in the second liquid storage chamber 12 is affected by heat.

The shell 14 includes a first shell 141 and a second shell 142 that are fitted together. The first shell 141 and the second shell 142 may be fitted together in a detachable or non-detachable manner, for example, by snap-fit, threaded connection, or magnetic connection. In some embodiments, the second shell 142 may be fitted to the upper end of the first shell 141, and the air outlet channel 181 may be formed by a downward extension of the top wall of the second shell 142.

The bracket 15 may include a partition wall 151, which covers the lower end opening of the second liquid storage chamber 12, with the replenishment channel 13 extending through the partition wall 151 to place the second liquid storage chamber 12 in fluid communication with the first liquid storage chamber 11.

In some embodiments, the bracket 15 may further include an annular side wall 152 extending upward from the partition wall 151, the annular side wall 152 being embedded into the opening of the second liquid storage chamber 12 in a sealed manner, thereby enhancing the sealing of the first liquid storage chamber 11 and preventing liquid leakage. In addition, a sealing member 17 may be sleeved between the annular side wall 152 and the wall of the second liquid storage chamber 12, and the sealing member 17 may be made of an elastic sealing material, such as silicone, to further enhance the sealing effect.

In some embodiments, the bracket 15 may further include a liquid injection tube 153 extending downward from the partition wall 151, with the replenishment channel 13 extending through the partition wall 151 and the liquid injection tube 153. The lower end surface of the liquid injection tube 153 can be configured to limit the upper end surface of the liquid storage member 111, and can maintain a distance between the liquid storage member 111 and the second liquid storage chamber 12. Certainly, in other embodiments, the bracket 15 may not include the liquid injection tube 153.

In some embodiments, the bracket 15 may further include a liquid storage shell 154 extending downward from the partition wall 151, the liquid storage shell 154 being tubular with a lower end opening and defining at least part of the first liquid storage chamber 11.

In some embodiments, the housing 10 may further include a supporting member 16 disposed in the shell 14. The supporting member 16 covers the lower end opening of the liquid storage shell 154, thereby defining the first liquid storage chamber 11 together with the liquid storage shell 154. The supporting member 16 and the liquid storage shell 154 may be engaged and fixed together. Certainly, in other embodiments, the supporting member 16 and the liquid storage shell 154 may be fixed together by any other known means.

In some embodiments, a liquid storage groove 161 is recessed in the bottom wall of the first liquid storage chamber 11, that is, in the top wall of the supporting member 16. The liquid storage groove 161 can temporarily store leaked liquid and is in fluid communication with the liquid storage member 111, allowing the liquid storage member 111 to absorb the leaked liquid for reuse, thereby enhancing the utilization rate of the aerosol generating substrate.

In some embodiments, the electronic control switch assembly 30 includes a drive assembly 31 and a valve assembly 32 connected to the drive assembly 31. The drive assembly 31 is electrically connected to the control module and is configured to drive the valve assembly 32 to move, thereby opening the replenishment channel 13 when powered on.

In some embodiments, the control module can also monitor and accumulate atomization time (e.g., by counting the number of inhalations). When the accumulated atomization time reaches a preset threshold (for example, after the user has taken several inhalations) and the aerosol generating substrate in the first liquid storage chamber 11 is nearly depleted, the control module automatically sends a drive signal to the drive assembly 31 to open the replenishment channel 13, thereby enabling automatic liquid replenishment.

In some embodiments, the control module may automatically stop supplying power to the drive assembly 31 after liquid replenishment is completed, for example, by automatically cutting off power after the drive assembly 31 has been powered for a preset duration.

The structure of the drive assembly 31 is not limited, and may, for example, include an actuator, a linear motor, a rotary motor, a gear mechanism, or an electromagnet. In this embodiment, the drive assembly 31 is implemented as an actuator, which can be mounted on the supporting member 16. In particular, the drive assembly 31 includes an actuating member 310, which is electrically connected to the control module and is at least partially made of shape memory material (e.g., an SMA). When the actuating member 310 undergoes a temperature change upon heating, the length of the actuating member 310 changes, thereby generating a driving force to move the valve assembly 32.

In some embodiments, when the drive assembly 31 is powered on, the actuating member 310 expands and elongates under current-induced heating, thereby driving the valve assembly 32 to open the replenishment channel 13. When the drive assembly 31 is powered off, the actuating member 310 gradually cools and returns to its original shape, causing the valve assembly 32 to close and thereby shut the replenishment channel 13.

In some embodiments, the actuating member 310 may be a spring made of an SMA or other shape memory material.

In some embodiments, the drive assembly 31 may further include a first connecting member 311 and a second connecting member 312, with the two ends of the actuating member 310 connected to the first connecting member 311 and the second connecting member 312, respectively, thereby establishing an electrical connection to the control module via the first connecting member 311 and the second connecting member 312.

The first connecting member 311 may include a connecting rod 3111 and a limiting disc 3112 extending outward from the outer wall surface of the connecting rod 3111. The actuating member 310 may be sleeved over the connecting rod 3111, and the upper end surface of the actuating member 310 may abut against the limiting disc 3112. The upper free end of the actuating member 310 may be embedded and fixed in the limiting disc 3112.

The second connecting member 312 may be disc-shaped and spaced apart from the limiting disc 3112. The lower end surface of the actuating member 310 may abut against the second connecting member 312, and the lower free end of the actuating member 310 may be embedded and fixed in the second connecting member 312. The connecting rod 3111 may be longitudinally disposed through the second connecting member 312 and be insulated from the second connecting member 312, allowing the connecting rod 3111 to move back and forth in the second connecting member 312.

The valve assembly 32 includes a valve 321 connected to the first connecting member 311. When the actuating member 310 expands and elongates under current-induced heating, the actuating member 310 drives the limiting disc 3112 to move, thereby driving the valve 321 to move and opening the replenishment channel 13.

The valve 321 may include a valve stem 3211 connected to the first connecting member 311 and a valve disc 3212 disposed at one end of the valve stem 3211. The valve stem 3211 is coaxially and fixedly connected to the first connecting member 311. A through hole 1112 may be formed through the liquid storage member 111, and the valve stem 3211 is disposed through the through hole 1112 to be movable back and forth within the through hole 1112. The cross-sectional dimension of the through hole 1112 is smaller than the cross-sectional dimension of the replenishment channel 13, such that the aerosol generating substrate flowing through the replenishment channel 13 can be received by the portion of the liquid storage member 111 surrounding the through hole 1112 and subsequently diffuse throughout the entire liquid storage member 111.

The valve disc 3212 is configured to open or close the replenishment channel 13. In some embodiments, the valve disc 3212 may be disposed at the upper end opening of the replenishment channel 13, the valve disc 3212 may abut against the partition wall 151 to close the replenishment channel 13, or may move upward away from the partition wall 151 to open the replenishment channel 13.

In some embodiments, the valve assembly 32 further includes a sealing member 322, and the sealing member 322 may be made of an elastic sealing material, such as silicone, thereby enhancing the sealing effect on the replenishment channel 13. Specifically, the sealing member 322 may be sleeved over the valve stem 3211, and the upper end of the sealing member 322 abuts against the valve disc 3212. When the valve disc 3212 is in the position closing the replenishment channel 13, the valve disc 3212 presses against the partition wall 151 via the sealing member 322, thereby more effectively sealing the replenishment channel 13.

In some embodiments, the valve assembly 32 further includes an elastic element 323 connected to the valve 321.

The elastic element 323 is configured to provide an elastic restoring force to reset the valve 321 from a state in which the replenishment channel 13 is opened to a state in which the replenishment channel 13 is closed.

In some embodiments, the elastic element 323 may be a spring and may be sleeved over the valve stem 3211. The upper end of the elastic element 323 may abut against the sealing member 322, or a boss may protrude from the valve stem 3211 to provide a surface against which the upper end of the elastic element 323 can abut. Certainly, in other embodiments, the elastic element 323 may alternatively be any other element capable of providing elastic force, such as a leaf spring or a disc spring.

In some embodiments, the electronic atomization device 1 includes a supporting sealing member 60, and the supporting sealing member 60 may be made of an elastic sealing material, such as silicone, and is capable of sealing the lower end of the first liquid storage chamber 11 to prevent liquid leakage.

The supporting sealing member 60 may include a main body portion 61, a sealing support portion 63, and a connecting portion 62 that connects the main body portion 61 to the sealing support portion 63. The main body portion 61 may include a sealing bottom wall 611 and a sealing side wall 612 extending upward from the periphery of the sealing bottom wall 611. The sealing bottom wall 611 covers the lower end opening of the first liquid storage chamber 11, and the sealing side wall 612 may be sleeved between the liquid storage shell 154 and the supporting member 16 in a sealed manner. Certainly, in other embodiments, the main body portion 61 may not include the sealing side wall 612.

The sealing support portion 63 may be annular and sleeved over the valve stem 3211 in a sealed manner, thereby preventing liquid from leaking along the valve stem 3211. The sealing support portion 63 is fixed to the valve stem 3211 and is movable back and forth together with the valve stem 3211. In some embodiments, the sealing support portion 63 may be configured to limit the elastic element 323, in particular, the lower end of the elastic element 323 may abut against the sealing support portion 63.

The connecting portion 62 has a thin-walled structure capable of deforming under external force, allowing the sealing support portion 63 to move back and forth relative to the main body portion 61 while maintaining a seal throughout the movement. In some embodiments, the connecting portion 62 may include a corrugated connecting portion 621 and a tapered connecting portion 622. The corrugated connecting portion 621 is connected to the sealing bottom wall 611, the upper flared end of the tapered connecting portion 622 is connected to the corrugated connecting portion 621, and the lower tapered end of the tapered connecting portion 622 is connected to the sealing support portion 63. When the valve stem 3211 moves up and down, driving the sealing support portion 63 to move together, the tapered connecting portion 622 can expand outward or contract inward.

The operation process of the electronic atomization device 1 may be as follows: When the user begins to inhale, the airflow sensing member 50 detects the change in air pressure and, via the control module, activates the battery 40 to supply power to the atomizing core 20, whereupon the aerosol generating substrate is immediately atomized. At the same time, the control module starts to accumulate the atomization time. Once the accumulated atomization time reaches the preset threshold, the control module sends a drive signal to the drive assembly 31. In this case, the actuating member 310 heats up and elongates when powered on, thereby driving the valve 321 above to open. After the valve 321 opens, the aerosol generating substrate in the second liquid storage chamber 12 can flow into the first liquid storage chamber 11 through the replenishment channel 13 under the action of gravity, thereby achieving automatic replenishment. Once the replenishment is complete, the control module stops sending drive signals to the drive assembly 31. The actuating member 310 gradually cools and contracts due to power loss, and the valve 321 moves downward and resets under the action of gravity and the elastic force of the elastic element 323, closing the replenishment channel 13 and cutting off the connection between the first liquid storage chamber 11 and the second liquid storage chamber 12.

The above technical features may be combined in different manners to form other embodiments without any limitation.

The above embodiments merely illustrate specific implementations of the present application, described in a detailed and concrete manner, but are not to be construed as limiting the scope of the present application patent. For a person of ordinary skill in the art, without departing from the concept of the present application, the above technical features can be combined in different manners, and various modifications and improvements can be made. Therefore, any equivalent transformations and modifications made within the scope of the claims of the present application are to be considered as falling within the coverage of the claims of the present application.

## Claims

1. An electronic atomization device, comprising:
a first liquid storage chamber (11) provided with a liquid storage member (111) therein;
an atomizing core (20) in fluid communication with the liquid storage member (111);
a second liquid storage chamber (12);
a replenishment channel (13) in communication with the first liquid storage chamber (11) and the second liquid storage chamber (12); and
an electronic control switch assembly (30) configured to open the replenishment channel (13) when powered on and close the replenishment channel (13) when powered off.

2. The electronic atomization device of claim 1, wherein the liquid storage space of the first liquid storage chamber (11) is smaller than the liquid storage space of the second liquid storage chamber (12).

3. The electronic atomization device of claim 1, further comprising a control module, wherein
the electronic control switch assembly (30) comprises a drive assembly (31) connected to the control module and a valve assembly (32) connected to the drive assembly (31), the drive assembly (31) comprising an actuating member (310) made of shape memory material.

4. The electronic atomization device of claim 3, wherein the actuating member (310) is a spring made of a shape memory alloy (SMA), and
the actuating member (310) elongates when electrically heated to drive the valve assembly (32) to move and open the replenishment channel (13).

5. The electronic atomization device of claim 4, wherein the drive assembly (31) further comprises a first connecting member (311) and a second connecting member (312),
the first connecting member (311) being disposed through the second connecting member (312) in an insulated manner and movable back and forth relative to the second connecting member (312), and
the actuating member (310) being sleeved over the first connecting member (311), and two ends of the actuating member (310) being connected to the first connecting member (311) and the second connecting member (312), respectively.

6. The electronic atomization device of claim 3, wherein the valve assembly (32) comprises a valve (321) connected to the drive assembly (31) and an elastic element (323) connected to the valve (321),
the elastic element (323) being configured to provide an elastic restoring force to return the valve (321) from a state in which the replenishment channel (13) is opened to a state in which the replenishment channel (13) is closed.

7. The electronic atomization device of claim 3, wherein the control module is configured to supply power to the electronic control switch assembly (30) when the accumulated atomization time reaches a preset threshold.

8. The electronic atomization device of claim 3, wherein the electronic atomization device comprises a housing (10), the housing (10) being partitioned to form a first space (1410) located at the lower portion and a second space (1420) located at the upper portion,
the first liquid storage chamber (11), the atomizing core (20), and the control module being located in the first space (1410), and the second liquid storage chamber (12) being located in the second space (1420).

9. The electronic atomization device of claim 8, wherein the electronic atomization device further comprises a battery (40) arranged in the first space (1410).

10. The electronic atomization device of any one of claims 1 to 9, wherein after the replenishment channel (13) is opened, aerosol generating substrate in the second liquid storage chamber (12) flows to the first liquid storage chamber (11) under the action of gravity.

11. The electronic atomization device of any one of claims 3 to 10, wherein the control module is configured to automatically cut off supplying power to the drive assembly (31) after the drive assembly (31) has been powered for a preset duration.

12. The electronic atomization device of any one of claims 1 to 11, wherein during the manufacturing stage, the liquid storage member (111) in the first liquid storage chamber (11) is not pre-filled with the aerosol generating substrate.

13. The electronic atomization device of any one of claims 1 to 12, wherein the atomizing core (20) includes a liquid-absorbing element (21) in fluid communication with the first liquid storage chamber (11), and a heating element (22) in contact with the liquid-absorbing element (21), wherein preferably, the liquid-absorbing capacity of the liquid-absorbing element (21) is greater than the liquid-absorbing capacity of the liquid storage member (111).

14. The electronic atomization device of any one of claims 1 to 13, wherein the atomizing core (20) and the second liquid storage chamber (12) are disposed non-coaxially, thereby maintaining a distance between the atomizing core (20) and the second liquid storage chamber (12).

15. The electronic atomization device of any one of claims 1 to 14, wherein the electronic atomization device (1) includes a supporting sealing member (60) capable of sealing a lower end of the first liquid storage chamber (11) to prevent liquid leakage;
wherein preferably, the supporting sealing member (60) includes a main body portion (61), a sealing support portion (63), and a connecting portion (62) that connects the main body portion (61) to the sealing support portion (63);
wherein preferably, the sealing support portion (63) is configured to move back and forth relative to the main body portion (61).
